# EUROPÄISCHE PATENTSCHRIFT

(11) **EP 1 531 296 B1**
(45) Veröffentlichungstag und Bekanntmachung des Hinweises auf die Patenterteilung: **08.02.2006**
(21) Anmeldenummer: 04027166.0
(22) Anmeldetag: 16.11.2004
(51) Int. Cl.: F16L 23/10

(54) **Verbindung**
Coupling
Raccordement

(30) Priorität: 17.11.2003 DE 10353632
(43) Veröffentlichungstag der Anmeldung: 18.05.2005
(73) Patentinhaber: Linnemann, Friedrich, 72127 Kusterdingen (DE)
(72) Erfinder: Linnemann, Friedrich, 72127 Kusterdingen (DE)

(56) Entgegenhaltungen:
- DE-A1- 4 210 383
- DE-A1- 10 155 362
- DE-A1- 19 757 969
- DE-U- 20 317 733
- DE-U1- 9 116 520

## Beschreibung

Die Erfindung betrifft eine Verbindung mit einem zwei Flansche umgreifenden Spannring mit mindestens einem lösbaren Verschluss.

Die DE 4210 383 A1 offenbart eine Verbindung mit einem Spannring, der eine Verschlussschraube mit einer Gewindemutter aufweist. Die Verschlussschraube ist an einem Verschlussteil des Spannrings schwenkbar gelagert und in eine Ausnehmung eines gegenüberliegenden Verschlussstücks einschwenkbar. An der oberen Stirnseite des Verschlussteils befindet sich eine Führungsgabel. Die Gewindemutter besitzt einen Rohransatz, der in der Verschlussposition das Verschlussstück durchsetzt. Am Ende des Rohransatzes ist eine Bundscheibe angeordnet, die das Verschlussstück an der dem Verschlussteil zugewandten Seite hintergreift und in der Verschlussposition von der Führungsgabel übergriffen ist.

Die DE 197 57 969 offenbart eine Verbindung mit einem Spannring, dessen an einem Verschlussteil schwenkbar gelagerte Verschlussschraube in eine Ausnehmung eines gegenüberliegenden Verschlussstücks einschwenkbar ist. Die Verschlussschraube weist einen Sperrteil und einen Freigabeteil auf. Zum Lösen des Spannrings muss die auf der Verschlussschraube gelagerte Gewindemutter so weit zurückgedreht werden, bis der Freigabeteil in den Bereich einer Verengung des Verschlussstücks gelangt.

Die Aufgabe der Erfindung besteht darin, eine Verbindung zu schaffen, bei der mit einfachen Mitteln eine günstige Herstellung und zuverlässige Funktion sowie hohe Sicherheit erzielt werden.

Diese Aufgabe wird durch die Merkmale des Anspruchs 1 gelöst.

Bevorzugte Ausgestaltungen und Weiterbildungen der Erfindung sind durch die Merkmale der Unteransprüche gekennzeichnet.

Weitere Vorteile und wesentliche Einzelheiten sind der nachfolgenden Beschreibung zu entnehmen.

Die erfindungsgemäße Verbindung besitzt zwei einander gegenüberliegende Flansche, die je einen Rohransatz aufweisen können. Die Rohransätze können an weiterführende Rohre, Behälter oder dergleichen angeschweißt werden. Zwischen den Flanschen kann eine Dichtung vorgesehen sein. Ein Spannring umgreift die Flansche an ihrem Außenumfang.

In einer bevorzugten Ausführung können zwei Spannglieder vorgesehen sein, die als ungefähr halbkreisförmige Halbschalen ausgebildet sind, wobei der Verschluss und die Gelenkverbindung einander diametral gegenüberliegen. Der Spannring kann aber auch drei oder mehr gelenkig miteinander verbundene Spannglieder aufweisen und als sogenannte Spannkette ausgeführt sein.

Die Gelenkverbindung kann eine Verbindungstasche aufweisen, die bevorzugt in Schlitzen der Spannglieder weitgehend verdeckt gelagert und an letzteren mit je einem Gelenkbolzen befestigt ist, so dass ein Doppelgelenk gebildet ist. Der Verschluss, über den die miteinander zu kuppelnden Spannglieder lösbar verbunden werden, kann einen an dem einen Spannglied angeordneten Verschlussteil und ein an dem anderen Spannglied angeordnetes Verschlussstück aufweisen.

Die Spannglieder können eine im Querschnitt V-förmige Nut aufweisen, in die die Flansche mit ihrem Umfangsrand eingreifen. Beim Anziehen des Verschlusses dringen die von den Spanngliedern übergriffenen Umfangsbereiche der Flansche tiefer in die sich zum Nutgrund hin konisch verengende V-Nut ein. Dadurch werden die Flansche in axialer Richtung dicht gegeneinander gedrückt.

Der an dem einen Spannglied angeordnete Verschlussteil kann eine im Querschnitt etwa U-förmige Aussparung aufweisen, die seitlich von zwei zueinander beabstandeten Wänden begrenzt ist. Das an dem anderen Spannglied angeordnete Verschlussstück besitzt eine im Querschnitt U-förmige Ausnehmung, die seitlich von zwei auf Abstand zueinander befindlichen Seitenwänden begrenzt ist. Dem Verschluss ist zudem eine Verschlussschraube zugehörig, die mit einem Kopfteil in der Aussparung des Verschlussteils an einem Achsbolzen schwenkbar gelagert ist und einen Gewindebolzen aufweist, der sich von dem Verschlussteil des einen Spannglieds in Richtung zum Verschlussstück des anderen Spannglieds erstreckt. Zweckmäßig kann das Gewinde durchgehend vom freien Ende des Gewindebolzens bis annähernd an den Kopfteil ausgebildet sein. Der Durchmesser des Gewindebolzens ist vorzugsweise nur etwas kleiner als die Breite der U-förmigen Ausnehmung bzw. der Abstand zwischen den Seitenwänden des Verschlussstücks.

Der Gewindebolzen kann hinsichtlich der Verschlussfunktion einen Sperrteil und einen im Querschnitt kleineren Freigabeteil aufweisen. Dieser Freigabeteil kann sich an mindestens einer, vorzugsweise zwischen zwei Freisparungen befinden, die an zwei einander gegenüberliegenden Seiten des Gewindebolzens ausgebildet sind. Dabei ist die Grundfläche der Freisparung zweckmäßig im wesentlichen parallel zur Seitenwand des Verschlussstücks ausgerichtet. Die Tiefe einer jeden Freisparung quer zur Schraubenlängsrichtung kann ungefähr gleich der Gewindetiefe des Gewindebolzens sein und die Breite des Freigabeteils quer zur Schraubenlängsrichtung kann in bevorzugter Ausführung ungefähr gleich dem Kemdurchmesser des Gewindebolzens sein. Der Durchmesser des Sperrteils ist vorteilhaft gleich dem Durchmesser des Gewindebolzens und wenn sich das Gewinde vom freien Ende der Verschlussschraube über den Freigabeteil und den Sperrteil bis annähernd zum Kopfteil erstreckt, ist der Sperrteil praktisch ein Teil des Gewindebolzens. Im Bereich des Freigabeteils ist das Gewinde lediglich an den seitlichen Freisparungen teilweise unterbrochen. In bevorzugter Ausführung erstreckt sich der Sperrteil des Gewindebolzens ungefähr ausgehend vom Verschlussteil der einen Halbschale bis zum Freigabeteil und weist dabei in Längsrichtung des Gewindebolzens eine größere Länge auf als der Freigabeteil, wobei der Abstand zwischen dem Verschlussteil und dem Freigabeteil größer ist als die Breite des Verschlussstücks.

Das Verschlussstück kann an der Öffnung der U-förmigen Ausnehmung eine Verengung aufweisen, die durch mindestens einen Anschlag für den Sperrteil des Gewindebolzens begrenzt ist. Zweckmäßig sind zwei Anschläge vorgesehen, zwischen denen sich die Verengung befindet. Die Anschläge sind jeweils an der die U-förmige Ausnehmung mitbegrenzenden Innenseite der Seitenwände des Verschlussstücks angeordnet. Die Breite der Verengung ist so ausgelegt, dass sie kleiner ist als der Durchmesser des Sperrteils bzw. des Gewindebolzens aber etwas größer als die Breite des Freigabeteils quer zur Längsrichtung des Gewindeteils. Der Gewindebolzen kann mit dem Freigabeteil durch die Verengung hindurch in die Ausnehmung eingeschwenkt und aus dieser herausgeschwenkt werden. Bei eingeschwenktem Gewindebolzen befindet sich der Anschlag in einer Ebene über dem Gewindebolzen, wobei der Anschlag mit einer dem Grund der U-förmigen Ausnehmung abgewandten Stimfläche der Seitenwände des Verschlussstücks bündig sein und eine dem Grund zugewandte Rund- oder Schrägfläche aufweisen kann. In axialer Richtung des Gewindebolzens kann die Länge des Anschlags ungefähr gleich oder etwas kleiner sein als die Breite der Seitenwände des Verschlussstücks. Die Länge des Anschlags in Längsrichtung des Gewindebolzens ist kleiner als die Länge des Freigabeteils bzw. der Freisparung des Gewindebolzens.

Auf dem Gewindebolzen der Verschlussschraube ist eine Gewindemutter drehbar gelagert, die zum Schließen des Spannrings gegen eine dem Verschlussteil abgewandte Anlagefläche des Verschlussstücks verlagerbar ist. Dazu kann die Gewindemutter an dem der Anlagefläche zugewandten Ende eine konvexe Wölbung aufweisen, so dass ein Kugelsegment gebildet ist, das in eine entsprechend ausgeführte Mulde eingreift, die an der Anlagefläche des Verschlussstücks ausgebildet ist. Die Gewindemutter kann eine von Hand betätigbare Flügel- oder Knebelmutter sein. In bevorzugter Ausführung ist die Gewindemutter aber nicht unmittelbar von Hand, sondern nur mit Hilfe eines Werkzeugs manuell betätigbar. Zweckmäßig kann die Gewindemutter dazu einen Außenmehrkant aufweisen, an den z.B. ein Maul-, Ring- oder Steckschlüssel angesetzt werden kann. Die Gewindemutter kann auch einen Innenmehrkant aufweisen, in den z.B. ein Inbusschlüssel hineingesteckt werden kann.

Der dem Verschlussstück zugewandte Endteil der Gewindemutter, an dem das Kugelsegment vorgesehen sein kann, kann vorteilhaft als im Querschnitt kreisringförmiger Bolzen ausgebildet sein, dessen Durchmesser größer ist als die Breite der U-förmigen Ausnehmung zwischen den Seitenwänden, wobei der größte Durchmesser des Kugelsegments parallel zur Ebene der Anlagefläche ungefähr gleich dem Durchmesser des Endteils der Gewindemutter ist. Dagegen kann der Radius des Kugelsegments quer zur Anlagefläche zweckmäßig größer sein als der Radius parallel zur Anlagefläche. Im Bereich des Endteils der Gewindemutter ist ein Mitnehmer vorgesehen der durch eine in radialer Richtung am Umfang offene Ringnut gebildet sein kann. Die Ringnut befindet sich in Längsrichtung der Gewindemutter direkt hinter dem Kugelsegment oder in einem geringen Abstand dazu. Die Breite der Ringnut in Längsrichtung der Gewindemutter ist gleich oder größer als der Abstand, in dem die Ringnut von dem der Anlagefläche zugewandten Gewindemutterende entfernt ist. Der Durchmesser der Grundfläche der Ringnut in der Gewindemutter ist bevorzugt kleiner als der Durchmesser des Gewindemutterendteils, wobei die radiale Tiefe der Ringnut in der Gewindemutter zweckmäßig kleiner ist als die Ringnutbreite.

Bei in die U-förmige Ausnehmung des Verschlussstücks eingeschwenkter Verschlussschraube korrespondiert der Mitnehmer der Gewindemutter mit einem Widerlager, das an der dem Verschlussteil abgewandten Seite auf Abstand vor der Anlagefläche des Verschlussstücks an diesem und/oder am zugehörigen Spannglied angeordnet ist. Das Widerlager kann zweckmäßig als im Querschnitt etwa flachrechteckförmiger Steg ausgebildet sein, der in die Ringnut der Gewindemutter hineinragt. Ist der Steg etwa in der Ebene des Grundes der U-förmigen Ausnehmung oder noch etwas tiefer an dem Spannglied angeordnet, so kann er direkt von unten, also an der den Anschlägen, die die Ausnehmungsöffnung verengen, diametral gegenüberliegenden Seite der Verschlussschraube in die Ringnut eingreifen. Außerdem kann es günstig sein, dass das Widerlager zwei vorzugsweise parallele Stege aufweist, die auf Abstand zueinander angeordnet sind und sich etwa in der Ebene der Seitenwände des Verschlussstücks bzw. der Freisparungen des Gewindebolzens an gegenüberliegenden Seiten der Gewindemutter befinden und in deren Ringnut eingreifen, wobei die beiden Stege vorzugsweise durch z.B. dazu rechtwinklig angeordnete Seitenstege direkt an den Seitenwänden des Verschlussstücks befestigt oder angeformt sein können. Die zwei beabstandeten Stege des Widerlagers können zudem ungefähr in der Ebene des Grundes der U-förmigen Ausnehmung über einen Stegteil verbunden sein, der ebenfalls in die Ringnut der Gewindemutter eingreifen kann.

Darüber hinaus kann es günstig sein, das Widerlager für den Mitnehmer der Gewindemutter und/oder den Anschlag für den Sperrteil der Verschlussschraube baueinheitlich auszuführen. Dabei können das Widerlager und/oder der Anschlag unmittelbar einstückig mit dem Verschlussstück und dem Spannglied hergestellt bzw. geformt sein. Es kann aber auch vorteilhaft ein etwa rechtwinkelförmiger Bügel gebildet sein, wobei der Anschlag an dem einen Schenkel des Bügels und das Widerlager an dem anderen Schenkel baueinheitlich ausgebildet sind und der an dem Verschlussstück bzw. dem Spannglied vorzugsweise durch Schweißen, Nieten oder Schrauben befestigbar ist.

Zum Kuppeln der Verbindung werden die Flansche vorzugsweise unter Zwischenschaltung einer Dichtung mit ihren einander zugewandten Dichtflächen koaxial gegeneinander gesetzt und der geöffnete Spannring wird so um die Flansche gelegt, dass die Flanschumfangsbereiche in die V-förmige Nut der Spannglieder gelangen und deren Verschlussteil und Verschlussstück sich einander nähern. Dann wird der Gewindebolzen der Verschlussschraube mit dem Freigabeteil durch die Verengung hindurch in die U-förmige Ausnehmung des Verschlussstücks eingeschwenkt. Anschließend wird die sich auf dem freien Endteil des Gewindebolzens befindliche Gewindemutter, vorzugsweise unter Zuhilfenahme eines Hilfswerkzeugs, weiter auf den Gewindebolzen aufgeschraubt, wobei das stirnseitige Kugelsegment der Gewindemutter in die Mulde der Anlagefläche des Verschlussstücks eingreift und letzteres in Richtung Verschlussteil drückt, bis die endgültige Verschlussposition erreicht ist und die Spannglieder die Flansche derart fest umschließen, dass eine dauerhaft dichte Verbindung gewährleistet ist. In der Verschlussposition befindet sich der Freigabeteil an dem Gewindebolzenteil, der das Verschlussstück und das Widerlager, das mit dem Mitnehmer der Gewindemutter in Eingriff ist, überragt und von der Gewindemutter überdeckt ist. Somit ist der Verschluss des Spannrings gegen ein unbeabsichtigtes Öffnen gesichert, denn die Anschläge übergreifen den Sperrteil des Gewindebolzens, so dass dieser in der U-förmigen Ausnehmung des Verschlussstücks formschlüssig zwangsgelagert ist und ein Herausschwenken des Gewindebolzens aus der U-förmigen Ausnehmung mit Sicherheit verhindert ist.

Zum Lösen der Verbindung wird zunächst die Gewindemutter vorzugsweise mit einem Hilfswerkzeug zurückgeschraubt. Da das Widerlager des Verschlussstücks mit dem Mitnehmer der Gewindemutter in Zwangseingriff ist, wird dabei der Abstand zwischen dem Verschlussteil und dem Verschlussstück zwangsweise vergrößert, wobei die Spannglieder langsam von den Flanschumfangsbereichen abgleiten. Je weiter die Gewindemutter zurückgeschraubt wird, umso weiterwird der Spannring zwangsgeöffnet und von den Flanschen entfernt. Dadurch lässt die Dichtigkeit zwischen den Flanschen nach, bis die Verbindung undicht ist, so dass ein im Rohr- oder Behältersystem befindlicher Mediumsdruck nicht plötzlich bzw. schlagartig, sondern stufenlos schraubgeregelt und somit feinfühlig kontrolliert entweichen kann. Nach dem Entweichen des Mediumsdrucks und dem weiteren Zurückschrauben der Gewindemutter bis in die Öffnungsposition, wobei ausgehend von der Verschlussposition mindestens zehn, vorzugsweise etwa fünfzehn Umdrehungen erfolgen sollten, befinden sich die Freisparungen des Gewindebolzens im Bereich der Anschläge. In dieser Freigabeposition kann die Verschlussschraube mit der am Endbereich des Gewindebolzens gelagerten Gewindemutter aus der U-förmigen Ausnehmung herausgeschwenkt werden, indem der Freigabeteil des Gewindebolzens durch die Verengung gleitet und der Mitnehmer und das Widerlager außer Eingriff gelangen. Danach kann der Spannring völlig geöffnet bzw. auseinandergeklappt und von den Flanschen entfernt werden.

Die erfindungsgemäße Verbindung kann vorteilhaft in verfahrenstechnischen Anlagen eingesetzt werden, die unter Druck stehende flüssige oder gasförmige Medien beinhalten. Derartige Anlagen werden oftmals z.B. bei einem Wechsel des Mediums zu Reinigungszwecken demontiert. Die erfindungsgemäße Flanschverbindung für Rohre und Druckbehälter ist dabei so beschaffen, dass vor der Trennung der Flansche bereits beim Zurückschrauben der Gewindemutter eine von der Bedienungsperson kontrollierbare Zwangsöffnung des Spannrings und steuerbare Druckentlastung erzielt wird. Mit der erfindungsgemäßen Verbindung werden die Vorteile einer schnellen Montage und Demontage, einer zwangsgeführten Sicherheitsfunktion mit integrierten Sperr- und Freigabepositionen des Verschlusses sowie einer zwangsweisen Öffnung bzw. Entfernung des Spannrings von den Flanschen erreicht, so dass insgesamt eine hohe Sicherheit gegeben ist.

## Patentansprüche

1. Verbindung, umfassend
- zwei Flansche und einen diese umgreifenden Spannring mit mindestens einem lösbaren Verschluss,
- eine Verschlussschraube, die an einem Verschlussteil des Spannrings schwenkbar angelenkt ist und einen Gewindebolzen aufweist,
- ein am Spannring vorgesehenes Verschlussstück mit einer U-förmigen Ausnehmung, in die der Gewindebolzen zum Schließen des Spannrings einschwenkbar ist,
- eine auf dem Gewindebolzen gelagerte Gewindemutter, die zum Schließen des Spannrings gegen eine Anlagefläche des Verschlussstücks verlagerbar ist, **gekennzeichnet durch**
- ein Widerlager, das an dem Verschlussstück an der dem Verschlussteil abgewandten Seite angeordnet ist,
- einen an der Gewindemutter ausgebildeten und mit dem Widerlager an der dem Verschlussteil abgewandten Seite in Eingriff bringbaren Mitnehmer.

2. Verbindung nach vorstehendem Anspruch, **dadurch gekennzeichnet, dass** der Spannring mindestens zwei die Flansche übergreifende Spannglieder aufweist, die gelenkig miteinander verbunden sind, und der Verschlussteil an dem einen und das Verschlussstück an dem anderen Spannglied vorgesehen ist.

3. Verbindung nach einem oder mehreren der vorstehenden Ansprüche, **dadurch gekennzeichnet, dass** die Gewindemutter an dem der Anlagefläche zugewandten Ende ein in eine Mulde des Verschlussstücks eingreifendes Kugelsegment aufweist, eine von dem Mitnehmer mitbegrenzte, am Umfang offene Ringnut für den Eingriff des Widerlagers besitzt und als Flügel- oder Knebelmutter ausgebildet ist und/oder einen Außen- und/oder Innenmehrkant für das Ansetzen eines Hilfswerkzeugs aufweist.

4. Verbindung nach einem oder mehreren der vorstehenden Ansprüche, **dadurch gekennzeichnet, dass** das Widerlager aus mindestens einem in die Ringnut der Gewindemutter hineinragenden Steg gebildet ist.

5. Verbindung nach einem oder mehreren der vorstehenden Ansprüche, **dadurch gekennzeichnet, dass** das Widerlager zwei etwa parallele Stege aufweist, die auf Abstand zueinander an gegenüberliegenden Seiten der Gewindemutter in die Ringnut eingreifen und bevorzugt über einen Stegteil verbunden sind, der etwa in der Ebene des Grundes der U-förmigen Ausnehmung vorgesehen ist.

6. Verbindung nach einem oder mehreren der vorstehenden Ansprüche, **dadurch gekennzeichnet, dass** die an gegenüberliegenden Seiten der Gewindemutter in die Ringnut eingreifenden Stege des Widerlagers an Seitenwänden des Verschlussstücks angeordnet sind, die die U-förmige Ausnehmung mitbegrenzen.

7. Verbindung nach einem oder mehreren der vorstehenden Ansprüche, **dadurch gekennzeichnet, dass** der Gewindebolzen der Verschlussschraube einen Sperrteil und einen im Querschnitt kleineren Freigabeteil aufweist, der an dem Teil des Gewindebolzens ausgebildet ist, das bei geschlossenem Spannring das Widerlager des Mitnehmers überragt und von der Gewindemutter überdeckt ist, und dass an der Ein- und Ausschwenköffnung der U-förmigen Ausnehmung des Verschlussstücks eine Verengung vorgesehen ist, die durch mindestens einen Anschlag für den Sperrteil des Gewindebolzens begrenzt ist.

8. Verbindung nach einem oder mehreren der vorstehenden Ansprüche, **dadurch gekennzeichnet, dass** an den auf Abstand zueinander angeordneten Seitenwänden des Verschlussstücks je ein Anschlag vorgesehen ist, zwischen denen die Verengung ausgebildet ist, und der Freigabeteil zwischen zwei an einander gegenüberliegenden Seiten des Gewindebolzens ausgebildeten Freisparungen angeordnet ist.

9. Verbindung nach einem oder mehreren der vorstehenden Ansprüche, **dadurch gekennzeichnet, dass** das Widerlager und/oder der Anschlag materialeinheitlich einstückig mit dem Spannglied hergestellt sind.

10. Verbindung nach einem oder mehreren der vorstehenden Ansprüche, **dadurch gekennzeichnet, dass** der Anschlag und/oder das Widerlager an einem bevorzugt rechtwinkelförmigen Bügel ausgebildet sind, der an dem Verschlussstück und/oder dem Spannglied befestigbar ist, wobei der Anschlag an dem einen und das Widerlager an dem anderen Schenkel des Bügels angeordnet ist.

## Claims

1. Connection, comprising:
- two flanges and a tensioning ring enclosing the same, with at least one disconnectable closure,
- a closure screw, tiltably affixed to a closure part of the tensioning ring and incorporating a threaded bolt,
- a closure piece envisaged on the tensioning ring, with a U-shaped recess into which the threaded bolt can be tilted for closing the tensioning ring,
- a threaded nut bearingly positioned upon the threaded bolt, the same being tiltably displaceable against an abutment surface of the closure piece for closing the tensioning ring,
**characterised by**
- a counter bearing positioned on the closure piece on the side facing away from the closure part,
- a follower formed on the threaded nut which can be brought into engagement on the side facing away from the counter bearing on the closure part.

2. Connection according to the preceding Claim, **characterised in that** the tensioning ring incorporates at least two tensioning members enclosing the flange, the same being moveably connected with one another, and the closure part being envisaged on the one, and the closure piece being envisaged on the other tensioning member.

3. Connection according to one or both of the preceding Claims, **characterised in that** the threaded nut incorporates a ball segment engaging a recess within the closure part at the end facing the abutment surface as well as an annular groove which is open around its circumference defined by the follower, for engaging the counter bearing and taking the form of a winged or knurled nut and/or incorporating an outer an/or inner multi-edged shape for inserting an auxiliary tool.

4. Connection according to one or more of the preceding Claims, **characterised in that** the counter bearing if formed by at least one bridge projecting into the annular groove of the threaded nut.

5. Connection according to one or more of the preceding Claims, **characterised in that** the counter bearing incorporates two approximately parallel bridges that engage the annular groove on opposite sides of the threaded nut at a distance from each other, and are preferably connected via a bridge part, the same being envisaged approximately along the level of the base of the U-shaped recess.

6. Connection according to one or more of the preceding Claims, **characterised in that** the bridges of the counter bearing engaging the annular groove on opposing sides of the threaded nut are positioned on side walls of the closure piece which define the U-shaped recess.

7. Connection according to one or more of the preceding Claims, **characterised in that** the threaded bolt of the closure screw incorporates a locking part and a releasing part with a smaller cross-section, the same being formed on the part of the threaded bolt that projects over the counter bearing of the follower when the tensioning ring is closed and is covered by the threaded nut, and **in that** a narrowing is envisaged at the tilt opening of the U-shaped recess of the closure piece, the same being defined by at least one shoulder for the locking part of the threaded bolt.

8. Connection according to one or more of the preceding Claims, **characterised in that** a shoulder each is envisaged on the side walls of the closure piece located at a distance from each other, between which the narrowing is formed, and **in that** the releasing part is positioned between two recesses formed on opposing sides of the threaded bolt.

9. Connection according to one or more of the preceding Claims, **characterised in that** the counter bearing and/or the shoulder is/are manufactured from a single piece together with the tensioning member.

10. Connection according to one or more of the preceding Claims, **characterised in that** the shoulder and/or the counter bearing are formed on a preferably rectangular clamp which can be affixed to the closure piece and/or the tensioning member, whereby the shoulder is located on one, and the counter bearing on the other shank of the clamp.

## Revendications

1. Raccord comprenant :
- deux brides et une bague de serrage enserrant celles-ci avec au moins une fermeture amovible,
- une vis de fermeture articulée en pivotement sur une partie de fermeture de la bague de serrage et qui présente un boulon fileté,
- un élément de fermeture prévu sur la bague de serrage et présentant un évidement en forme de U dans lequel le boulon fileté peut être pivoté pour fermer la bague de serrage,
- un écrou fileté logé sur le boulon fileté et qui peut être déplacé contre une surface d'appui de l'élément de fermeture pour fermer la bague de serrage,
**caractérisé par**
- une contre-butée disposée sur l'élément de fermeture du côté opposé à la partie de fermeture, et
- un entraîneur formé sur l'écrou fileté et pouvant coopérer avec la contre-butée située du côté opposé à la partie de fermeture.

2. Raccord selon la revendication précédente,
**caractérisé en ce que**
la bague de serrage présente au moins deux organes de serrage recouvrant les brides, qui sont reliés de manière articulée l'un à l'autre, et la partie de fermeture est prévue sur l'un des organes de serrage et l'élément de fermeture sur l'autre organe de serrage.

3. Raccord selon l'une ou plusieurs des revendications précédentes,
**caractérisé en ce qu'**
à l'extrémité tournée vers la surface d'appui, l'écrou fileté est muni d'un segment sphérique engagé dans un creux de élément de fermeture, d'une rainure annulaire ouverte au niveau de la périphérie et également délimitée par l'entraîneur pour l'engagement de la contre-butée et présente la forme d'un écrou papillon ou d'un écrou à oreilles et/ou un embout polygonal extérieur et/ou intérieur pour positionner un outil auxiliaire.

4. Raccord selon l'une ou plusieurs des revendications précédentes,
**caractérisé en ce que**
la contre-butée est formée à partir d'au moins une nervure saillante dans la rainure annulaire de l'écrou fileté.

5. Raccord selon l'une ou plusieurs des revendications précédentes,
**caractérisé en ce que**
la contre-butée présente deux nervures sensiblement parallèles engagées à distance l'une de l'autre sur des faces opposées dans la rainure annulaire et reliées de préférence par un élément de nervure prévu sensiblement dans le plan du fond de l'évidemment en forme de U.

6. Raccord selon l'une ou plusieurs des revendications précédentes,
**caractérisé en ce que**
les nervures de la contre-butée engagées sur des faces opposées de l'écrou fileté dans la rainure annulaire sont disposées sur des parois latérales de l'élément de fermeture qui délimitent également l'évidement en forme de U.

7. Raccord selon l'une ou plusieurs des revendications précédentes,
**caractérisé en ce que**
le boulon fileté de la vis de fermeture présente une partie de blocage et une partie de déblocage d'une section transversale plus petite et formée sur la partie du boulon fileté qui dépasse de la contre-butée de l'entraîneur lorsque la bague de serrage est fermée et est recouverte par l'écrou fileté, et un rétrécissement prévu au niveau de l'ouverture de pivotement de l'évidement en forme de U de l'élément de fermeture est délimité par au moins une butée pour la partie de blocage du boulon fileté.

8. Raccord selon l'une ou plusieurs des revendications précédentes,
**caractérisée en ce que**
les parois latérales de l'élément de fermeture écartées l'une de l'autre comportent chacune une butée entre lesquelles est formé le rétrécissement, et la partie de déblocage est disposée entre deux évidements formés sur des faces du boulon fileté opposées l'une à l'autre.

9. Raccord selon l'une ou plusieurs des revendications précédentes,
**caractérisé en ce que**
la contre-butée et/ou la butée est réalisée à partir d'un même matériau d'un seul tenant avec l'organe de serrage.

10. Raccord selon l'une ou plusieurs des revendications précédentes,
**caractérisé en ce que**
la butée et/ou la contre-butée est formée sur un étrier de préférence rectangulaire qui peut être fixé à l'élément de fermeture et/ou l'organe de serrage, la butée étant disposée sur l'une et la contre-butée sur l'autre branche de l'étrier.
